# EUROPEAN PATENT SPECIFICATION

(11) **EP 2 691 848 B1**
(45) Date of publication and mention of the grant of the patent: **01.11.2017**
(21) Application number: 12764203.1
(22) Date of filing: 29.03.2012
(51) Int. Cl.: G06F 7/04, G06Q 30/02, G06F 21/31, G06F 21/56, G06F 17/30

(54) **DETERMINING MACHINE BEHAVIOR**
BESTIMMUNG EINES MASCHINENVERHALTENS
DÉTERMINATION D'UN FONCTIONNEMENT D'AUTOMATE

(30) Priority: 31.03.2011 CN 201110081101
(43) Date of publication of application: 05.02.2014
(73) Proprietor: Alibaba Group Holding Limited, Grand Cayman (KY)
(72) Inventor: HOU, Xinjie, Hangzhou 310013 (CN); YE, Min, Hangzhou 310013 (CN); XIANG, Tao, Hangzhou 310013 (CN)
(74) Representative: Gosnall, Toby
(86) International application number: PCT/US2012/031248
(87) International publication number: WO 2012/135519

(56) References cited:
- WO-A2-2010/143152
- US-A1- 2009 241 174
- US-A1- 2010 095 374
- US-A1- 2011 029 902
- Kyoungsoo Park ET AL: "Securing Web Service by Automatic Robot Detection", 2006 USENIX Annual Technical Conference, 1 June 2006 (2006-06-01), pages 255-260, XP055014847, Retrieved from the Internet: URL:http://usenix.com/events/usenix06/tech /full_papers/park/park.pdf [retrieved on 2011-12-14]
- STASSOPOULOU A ET AL: "Web robot detection: A probabilistic reasoning approach", COMPUTER NETWORKS, ELSEVIER SCIENCE PUBLISHERS B.V., AMSTERDAM, NL, vol. 53, no. 3, 27 February 2009 (2009-02-27), pages 265-278, XP025922087, ISSN: 1389-1286, DOI: 10.1016/J.COMNET.2008.09.021 [retrieved on 2008-10-21]

## Description

### CROSS REFERENCE TO RELATED PATENT APPLICATIONS

This application claims foreign priority to Chinese Patent Application No. 201110081101.2 filed on 31 March 2011, entitled "Method, Web Brower, and Web server for Determining Machine Behavior"..

### TECHNICAL FIELD

The present disclosure relates to a field of information technology in the internet, and, more specifically, to a method, a web browser, and a web server for determining machine behavior.

### BACKGROUND

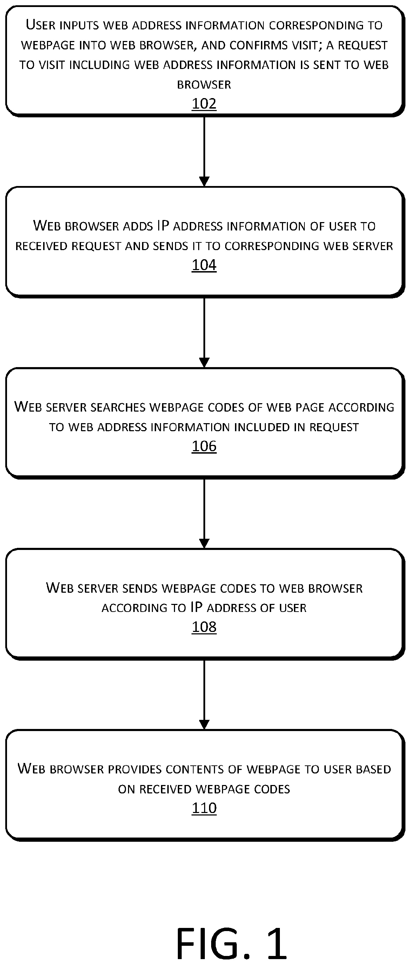

With the development of internet technology, more and more information sources have chosen the internet as the transmission media. A user may use a web browser to access information of various webpages. FIG. 1 illustrates an example flowchart illustrating a user using a web browser to visit a webpage under existing techniques.

At 102, the user inputs web address information corresponding to the webpage into the web browser, and confirms a visit. That is, a request to visit is sent to the web browser. The request to visit includes the web address information.

At 104, the web browser adds internet protocol (IP) address information of the user into the received request to visit, and sends it to a corresponding web server.

At 106, the web server searches webpage codes of the web page according to the web address information included in the request to visit.

At 108, the web server sends the webpage codes to the web browser according to IP address of the user.

At 110, the web browser provides contents of the webpage to the user based on the received webpage codes.

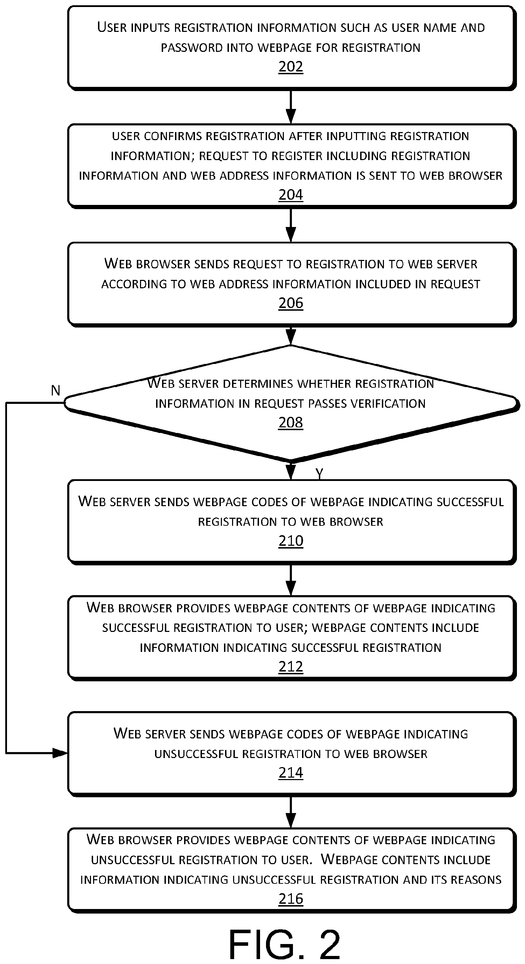

When the user visits the webpage, the user may use the web browser to view information in the webpage, and conduct other operations such as registration, logging-in, post, and reply. When the web page is for user registration, FIG. 2 illustrates an example flowchart illustrating the user using the web browser to conduct registration.

At 202, the user inputs registration information such as user name and password into the webpage for registration. A user name input box is used to input the user name and a password input box is used to input the password.

At 204, the user confirms the registration after inputting the registration information such as the user name and password. That is, a request to register is sent to the web browser. The request to register includes the registration information input by the user and the web address information corresponding to the webpage.

At 206, the web browser sends the request to register to the corresponding web server according to the web address information in the request to register.

At 208, the web server verifies the registration information in the request to register. If it passes the verification process, then operation 210 is performed; otherwise, operation 214 is performed.

At 210, the web server sends webpage codes of a webpage indicating successful registration to the web browser.

At 212, the web browser provides webpage contents of the webpage indicating successful registration to the user according to received webpage codes. The webpage contents include information indicating successful registration.

At 214, the web server sends webpage codes of a webpage indicating unsuccessful registration to the web browser.

At 216, the web browser provides webpage contents of the webpage indicating unsuccessful registration to the user according to received webpage codes. The webpage contents include information indicating unsuccessful registration and reasons for unsuccessful registration.

Under existing techniques, some users may use software programs to imitate human operations to conduct malicious registration, logging-in, post, and reply in order to obtain website credits or publish advertisements or malicious information on the website. For example, after the user executes a malicious registration software, the software program will imitate human operations, input randomly generated registration information on the user registration webpage, and then click to complete registration. The operational behavior resulting from the software program that imitates human operations may be referred to as machine behavior.

If the web server cannot determine whether the user actions to the webpage are machine behavior or not, the web server will process different operation requests resulting from the machine behavior (such as the request to register, the request to log-in, the request to post, the request to reply, etc.). This will consume lots of processing resources of the web server and reduce the processing efficiency of the web server. In addition, the web server will have to accumulate a huge volume of data resulting from the malicious behavior, which consumes lots of storage resources of the web server.

To address the above problems, the existing techniques may determine whether the operational behavior is the machine behavior after receiving the operation requests (such as the request to register, the request to log-in, the request to post, the request to reply, etc.). If the operation request is determined to be machine behavior, such request will not be processed. The existing techniques generally use two methods as described below to determine machine behavior.

The first method is IP address analysis method. If the same IP address continuously sends out specific operation requests (e.g., requests to register) in a very short period of time, the operation behavior on the webpage is most likely machine behavior.

The first method primarily uses the IP address associated with the user as a basis for determining the machine behavior. As the IP address can be quickly changed, the machine behavior cannot be accurately determined with respect to frequently changed IP addresses. Thus, the accuracy of determining machine behavior is low.

The second method is operation information analysis method. This method analyzes the operation information included in the specific operation request from the user. For example, if the specific operation request is the request to register, the registration information in the request to register is the operation information. If the result of the analysis shows that certain patterns exist among the operation information in several specific operation requests from the user, the operation behavior on the webpage is most likely machine behavior. For example, user A sends 4 requests to register to the web server by using the web browser. The user name (registration information) in the first request to register is "ABCDE," the user name in the second request to register is "ABCDF," the user name in the third request to register is "ABCDG," and the user name in the fourth request to register sent "ABCDH." By analyzing the 4 user names, the web server finds that the first four characters in the 4 user names are "ABCD," and the only difference is the last character. The web server may determine that there is an apparent pattern among these user names and thus determine that the user A's registration behavior on the webpage is machine behavior.

Many malicious types of software programs, however, are capable of randomly generating operation information. For example, the user may use software programs that randomly generate user names for each registration at the webpage. Thus, there is not an apparent pattern among the user names and the web server cannot determine whether the registration behavior of the user is machine behavior or not. Therefore, the accuracy of determining machine behavior is also low based on the second method.

Thus the existing techniques for determining machine behavior have low accuracies.

Kyoungsoo Park et al., "Securing Web Service by Automatic Robot detection", 2006 USENIX Annual Technical Conference, pages 255-260, discloses an approach to the problem of identifying Web robots involving as a special form of the Turing test and defending the system by inferring if the traffic source is human or robot. By extracting the implicit patterns of human Web browsing, algorithms to detect human users are developed.

Stassopoulou A. et al., "Web robot detection: A probabilistic reasoning approach", Computer Networks, Vol. 53, no. 3, Feb. 2009, pages 265-278 discloses a probabilistic modeling approach for addressing the problem of Web robot detection from Web-server access logs. More specifically, a Bayesian network that automatically classifies access log sessions as being crawler- or human-induced, by combining various pieces of evidence proven to characterize crawler and human behaviour, is constructed. The approach uses an adaptive-threshold technique to extract Web sessions from access logs. Then, machine learning techniques are applied to determine the parameters of the probabilistic model. The resulting classification is based on the maximum posterior probability of all classes given the available evidence.

US 2011/029902 (A1) discloses systems and methods for providing identification tests. In some embodiments, a system and a method are provided for generating and serving to a user an animated challenge graphic comprising a challenge character set whose appearance may change over time. In some embodiments, marketing content is incorporated into a challenge message for use in an identification test. The marketing content may be accompanied by randomly selected content to increase a level of security of the identification test, in some embodiments, a challenge message for use in an identification test is provided based on information regarding a transaction for which the identification test is administered. For example, the transaction information may include a user identifier such as an IP address. In some embodiments, identification test results are tracked and analyzed to identify a pattern of behavior associated with a user identifier. A score indicative of a level of trustworthiness may be computed for the user identifier.

WO 2010/143152 (A2) discloses a method of identifying if a web client has browser capabilities. An originating machine receives a web page request from the web client. The originating machine generates a page request id (PRID) and a script which, when executed by a web client with a browser, regenerates a PRID, and embeds the script in a response. The originating machine sends the response to the web client for the web client to process and, if the web client is capable, to execute the embedded script, thereby to regenerate a PRID, and to return the regenerated PRID to the originating machine. The originating machine compares the returned regenerated PRID with the generated PRID, a match indicating that the web client has browser capabilities.

US 2009/241174 (A1) discloses a system and method for determining whether a user of a computer is a human, comprising: generating dynamic request code asking the user for information; sending the dynamic request code to the computer; receiving validation code as an answer to the dynamic request code; and determining whether or not the validation code was generated by a human.

US 2010/095374 (A1) discloses computer implemented methods for detecting bot-user groups that send spam email over a web-based email service. Embodiments of the disclosed system employ a two-prong approach to detecting bot-user groups. The first prong employs a historical-based approach for detecting anomalous changes in user account information, such as aggressive bot-user signups. The second prong of the present system entails constructing a large user-user relationship graph, which identifies bot-user sub-graphs through finding tightly connected subgraph components.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The term "techniques," for instance, may refer to device(s), system(s), method(s) and/or computer- readable instructions as permitted by the context above and throughout the present disclosure.

The present disclosure discloses a method for determining machine behavior. When the user visits a webpage, the web browser obtains information of the user's operation behavior on the webpage and sends the obtained information of the operation behavior to the web server. The web server determines a weighted value of machine behavior based on obtained information of the user's operation behavior on the webpage. When the web server determines that the weighted value of machine behavior is not less than a defined threshold, it determines that user's operation behavior on the webpage is machine behavior.

The present disclosure also discloses a web browser for determining machine behavior. The web browser includes an obtaining unit and a transmission unit. The obtaining unit obtains information of the user's operation behavior on the webpage when the user visits the webpage. The transmission unit sends the obtained information of the operation behavior to the web server.

The present disclosure also discloses a web server for determining machine behavior. The web server includes a first receiving unit, a first determining unit, a first assessing unit, and a second determining unit. The first receiving unit receives the information of the user's operation behavior on the webpage that is sent by the web browser. The first determination unit determines the weighted value of machine behavior based on the received information of the user's operation behavior from the first receiving unit. The first assessing unit determines whether the weighted value of machine behavior is less than the defined threshold. The second determining unit determines that the user's operation behavior on the webpage is machine behavior when a result from the first assessing unit is negative.

Under the techniques of the present disclosure, when the user visits the webpage, the web browser obtains information of the user's operation behavior on the webpage and sends the obtained information of the operation behavior to the web server. The web server determines the weighted value of machine behavior based on obtained information of the user's operation behavior on the webpage. When the web server determines that the weighted value of machine behavior is not less than the defined threshold, the user's operation behavior on the webpage is determined to be machine behavior.

Thus, the present techniques do not rely on the IP address analysis method or the operation information analysis method to determine machine behavior. Rather, the present techniques use the user's operation behavior on the webpage to assess whether the operation behavior is machine behavior or not. This effectively increases the accuracy of determining machine behavior so that the web server can accurately distinguish the machine behavior and need not process the operation requests resulting from the machine behavior. The present techniques save processing resources of the web server, increase processing efficiency of the web server, and save storage resources of the web server.

### BRIEF DESCRIPTION OF THE DRAWINGS

To better illustrate embodiments of the present disclosure, the following is a brief introduction of figures to be used in descriptions of the embodiments. It is apparent that the following figures only relate to some embodiments of the present disclosure. A person of ordinary skill in the art can obtain other figures according to the figures in the present disclosure without creative efforts.
FIG. 1 illustrates a flowchart of a method in which a user uses the web browser to visit the webpage in accordance with existing techniques.
FIG. 2 illustrates a flowchart of a method in which a user users the web browser to conduct a registration operation in accordance with existing techniques.
FIG. 3 illustrates a flowchart of an example method for determining machine behavior in accordance with an example embodiment of the present disclosure.
FIG. 4 illustrates an example machine behavior identification and analysis model.
FIG. 5 illustrates a flowchart of an example method for determining machine behavior based on interaction among the user, the web browser, and the web server in accordance with an example embodiment of the present disclosure.
FIG. 6 is a diagram illustrating an example system for implementing functionality of the web browser in accordance with an example embodiment of the present disclosure.
FIG. 7 is a diagram illustrating an example web server in accordance with an example embodiment of the present disclosure

### DETAILED DESCRIPTION

The following provides a detailed description of the example embodiments in accordance with the present disclosure by reference to the FIGs. The example embodiments described herein are only used as examples for discussions, and are not used to limit the present disclosure.

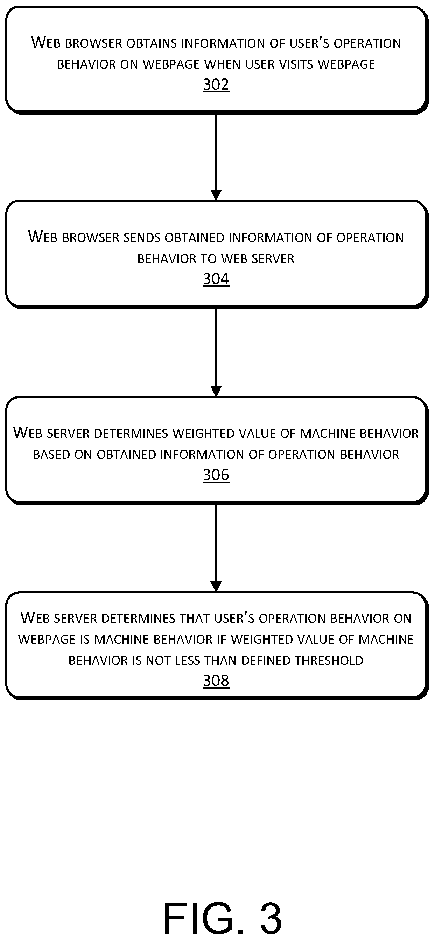

FIG. 3 illustrates a flowchart of an example method for determining machine behavior in accordance with a first example embodiment.

At 302, the web browser obtains information of the user's operation behavior on the webpage when the user visits the webpage.

The user's operation behavior on the webpage refers to operation information relating to the user's different operation behaviors on the webpage, such as sliding mouse, using keyboard for data entry, etc. For example, the operation information may include mouse operation information, keyboard operation information, operation flow information, etc.

For instance, the mouse operation information includes coordinate information of one or more mouse buttons, clicking time information of the mouse buttons, and a number of clicks. The keyboard operation information includes values of one or more keys of the keyboard, clicking time information of the keys, and a number of clicks. The operation process information includes operation sequence information of the mouse operation and the keyboard operation and operation sequence information of elements on the webpage. The operation sequence information of the mouse and the keyboard refers to a sequence of each of the operation behaviors using the mouse and the keyboard. The element on the webpage refers to an element representing respective functionality on the webpage, such as a button, a picture, a link, etc. Each webpage may contain multiple elements. The operation sequence information of elements on the webpage refers to an operation sequence of the user on different elements of the webpage.

The present techniques may use, but are not limited to, behavior collection instructions embodied on computer storage media to collect the user's operation behavior on the webpage. The instructions may be computer-executable instructions.

For example, when the user makes the request to visit the webpage, the web browser retrieves the behavior collection instructions from the web server, and, based on the retrieved behavior collection instructions, collects the information of the user's operation behavior on the webpage.

The web browser may use methods including but not limited to the following two example methods as described below to retrieve the behavior collection instructions from the web server.

In a first example retrieval method, the behavior collection instructions are inserted into webpage codes of the webpage. When the user subsequently visits the webpage, the web browser uses the behavior collection instructions embedded into the webpage codes of the webpage to collect the information of the user's operation behavior on the webpage.

For example, the user enters the web address information of the webpage that the user intends to visit in the web browser, and confirms the visit. That is, the user sends the request to visit to the web browser. The request to visit includes the web address information of the webpage entered by the user. The web browser, based on the web address information of the webpage, sends the request to visit to the web server. The web server, based on the web address information of the webpage included in the request to visit, searches webpage codes of the webpage that corresponds to the web address information. The found webpage codes include the behavior collection instructions. The web server sends the found webpage codes to the web browser. The web browser, based on the received webpage codes, displays contents of the webpage to the user, and loads the behavior collection instructions and the received webpage codes into a visiting process when the user visits the webpage. When the user visits the webpage, the web browser collects the information of the user's operation behavior on the webpage according to the loaded behavior collection instructions.

In a second example retrieval method, retrieval instructions for retrieving the behavior collection instructions from the web server are inserted into webpage codes of the webpage. When the user subsequently visits the webpage, the web browser uses the retrieval instruction to retrieve the behavior collection instructions from the web server, and uses the retrieved behavior collection instructions to collect the information of the user's operation behavior on the webpage when the user visits the webpage.

For example, the user enters the web address information of the webpage that the user intends to visit in the web browser, and confirms the visit. That is, the user sends the request to visit to the web browser. The request to visit includes the web address information of the webpage entered by the user. The web browser, based on the web address information of the webpage, sends the request to visit to the web server. The web server, based on the web address information of the webpage included in the request to visit, searches webpage codes of the webpage that corresponds to the web address information of the webpage. The found webpage codes include the retrieval instructions for retrieving the behavior collection instructions. The web server sends the found webpage codes to the web browser. The web browser, based on the received webpage codes, displays contents of the webpage to the user, and sends a retrieval request to retrieve the behavior collection instructions from the web server according to the retrieval instructions embedded in the webpage codes. After receiving the retrieval request, the web server sends the behavior collection instructions to the web browser. The web browser loads the behavior collection instructions into the visiting process when the user visits the webpage. When the user visits the webpage, the web browser collects the information of the user's operation behavior on the webpage according to the loaded behavior collection instructions.

In the second example method, the operation that inserts the retrieval instructions for retrieving the behavior collection instructions from the web server into the webpage codes may be referred to as "embedding point" operation. The web browser receives the webpage codes sent by the web server. When the web browser executes at the "point" embedded in the webpage, it triggers retrieving the behavior collection instructions from the web server according to the retrieval instructions, and embeds the retrieved behavior collection instructions into the webpage codes.

In the first example method, the behavior collection instructions may be embedded in the webpage codes of the webpage received by the web browser. In the second example method, the behavior collection instructions after being retrieved by the web browser may also be embedded into the webpage codes. If the user is able to obtain the webpage codes and analyze the behavior collection instructions in the webpage codes, the user may be able to manipulate the behavior collection instructions to collect the operation behavior information. Thus, the collected information of the operation behavior may become inaccurate, and in turn, the accuracy of determining machine behavior is low. To address this problem, in the second example retrieval method, after the web server receives the retrieval request from the web browser, it may firstly perform obfuscation computing of the behavior collection instructions that are to be sent to the web browser. That is, the web server uses one or more obfuscation algorithms to perform obfuscation computing of the behavior collection instructions, and sends the obfuscated behavior collection instructions to the web browser.

The web browser embeds the obfuscated behavior collection instructions into the webpage codes, and uses one or more deobfuscation algorithms corresponding to the above one or more obfuscation algorithms to conduct deobfuscation computing of the obfuscated behavior collection instructions, and then loads the deobfuscated behavior collection instruction into the visiting process when the user visits the webpage. Thus the behavior collection instructions embedded in the webpage codes are obfuscated behavior collection instructions. The user cannot directly perform analysis on the webpage codes to obtain the behavior collection instructions. Therefore, the accuracy of collecting the information of operation behavior is improved and the accuracy of determining machine behavior is also improved.

The first example embodiment also provides an example method for performing obfuscation computing of the behavior collection instructions at real-time to further improve the accuracy of collecting information of operation behavior and accuracy of determining machine behavior. Corresponding relationships between the one or more obfuscation algorithms and various time periods are pre-established and stored at the web server. Corresponding relationships between the one or more deobfuscation algorithms and various time periods are pre-established and stored at the web browser. The web server is not limited to use one obfuscation algorithm to perform obfuscation computing of the behavior collection instructions. Rather, the web server, according to a time period when the retrieval request is received, searches the one or more obfuscation algorithms that correspond to the time period based on the corresponding relationship between each time period and the obfuscation algorithms. Then the web server performs obfuscation computing of the behavior collection instructions by using the found one or more obfuscation algorithms, and sends the obfuscated behavior collection instructions to the web browser.

The web browser, after receiving the obfuscated behavior collection instructions, embeds the obfuscated behavior collection instructions into the webpage codes. Then the web browser, according to a time period when the retrieval request is sent, searches the one or more deobfuscation algorithms that correspond to the time period based on the corresponding relationship between each time period and the deobfuscation algorithms. The web browser performs deobfuscation computing of the obfuscated behavior collection instructions by using the corresponding one or more deobfuscated algorithms, and loads the deobfuscated behavior collection instructions into the visiting process when the user visits the webpage.

As the web server uses different obfuscation algorithms for different time periods when performing obfuscation computing of the behavior collection instructions, the obfuscated behavior collection instructions received by the web browser in different time periods are not the same. The obfuscation algorithms change dynamically, thereby preventing the user from analyzing the pre-obfuscated behavior collection instructions based on the obfuscated behavior collection instructions. Therefore, the accuracy of collecting the information of operation behavior is improved and the accuracy of determining machine behavior is also improved.

For example, the behavior collection instructions may use, but are not limited to, JAVA™ scripts (JS, JAVASCRIPT) codes. In one example, the behavior collection instructions may be called JS collection instructions. The embedding point operation to insert retrieval instructions for behavior collection instructions may also be referred to as a "JS embedding point" operation. When the JS collection instructions collect the information of the user's operation behavior on the webpage, a document object model (DOM) event stack method may be used to record the mouse and keyboard events of the user.

In addition, the web browser may use the behavior collection instructions to record some of the user's identification information, such as the user's Medium Access Control (MAC) address information.

The present techniques in the first example embodiment embed the behavior collection instructions or the retrieval instructions for retrieving the behavior collection instructions into the webpage codes of each webpage. When the user visits each webpage, the web server may assess whether the user's operation behavior on the webpage is machine behavior or not. In addition, the present techniques may also embed the behavior collection instructions or the retrieval instructions into the webpage codes of one or more designated webpages. For example, the designated webpages may be webpages having a higher probability than a threshold that the user may conduct malicious registration, such as the user registration webpages by which the user may maliciously conduct registration, or the log-in webpages by which the user may maliciously log in, or the posting webpages by which the user may make malicious post.

At 304, the web browser sends the obtained information of the operation behavior to the web server.

Before the web browser sends the information of operation behavior to the web server, it may encrypt the information of operation behavior by using a preset encryption algorithm. After the encrypted information of the operation behavior is sent to the web server, the web server may decrypt the information of operation behavior by using a preset decryption algorithm, thereby improving the security of transmitting the information of operation behavior between the web browser and the web server.

The present techniques may use several methods including but not limited to two example methods as described below to transmit the obtained information of the operation behavior from the web browser to the web server.

In a first example transmission method, the web browser sends the information of operation behavior according to a schedule. For example, multiple scheduled points in time may be preset. When one preset point in time arrives, the web browser sends the obtained information of operation behavior on the webpage during a time period, ranging from a preceding defined point in time to the current point in time, to the web server.

In a second example transmission method, the web browser sends the information of operation behavior upon receiving a designated operation request from the user. For example, if the webpage visited by the user is a user registration webpage, then after the web browser receives the request to register from the user (i.e., after the user has entered the registration information and confirms the request to register), the web browser sends the information of user's operation behavior to the web server. If the webpage visited by the user is a log-in webpage, then after the web browser receives the log-in request from the user (i.e., after the user has entered the log-in information and confirms the request to log-in), the web browser sends the information of user's operation behavior to the web server. If the webpage visited by the user is a posting webpage, then after the web browser receives the posting request from the user (i.e., after the user has entered the post and confirms the request to post), the web browser sends the information of user's operation behavior to the web server.

At 306, the web server determines the weighted value of machine behavior based on obtained information of operation behavior.

The present techniques may use several methods including but not limited to the following method as described below to determine the weighted value of machine behavior.

Based on the mouse operation information in the received information of operation behavior, the web server determines the corresponding weighted value of the mouse machine behavior ***W₁***. Based on the keyboard operation information in the received information of operation behavior, the web server determines the corresponding weighted value of the keyboard machine behavior ***W₂***. Based on the mouse operation information and keyboard operation information in the received information of the operation behavior, the web server determines the corresponding weighted value of the operation flow machine behavior ***W₃**.* The web server may also obtain weighted values of other operation information. Then the web server, based on these weighted values, calculates the weighted value of machine behavior for the user's operation behavior on the webpage. For example, based on the weighted value of the mouse machine behavior ***W₁***, the weighted value of the keyboard machine behavior ***W₂***, and the weighted value of the operation flow machine behavior ***W₃***, the web server determines the weighted value of machine behavior for the user's operation behavior on the webpage.

There may be various calculation methods. In one example calculation method, the weighted value of the mouse machine behavior ***W₁***, the weighted value of the keyboard machine behavior ***W₂***, and the weighted value of the operation flow machine behavior ***W₃*** may be added up in order to obtain the weighted value of machine behavior, i.e., W = **W₁** + **W₂** + **W₃.**

In another example method, the corresponding weighted factors may be defined for each of the weighted values, such as the weighted value of the mouse machine behavior, the weighted value of the keyboard machine behavior, and the weighted value of the operation flow machine behavior. For example, the defined weighted factor for the weighted value of the mouse machine behavior is ***Q₁*,** the defined weighted factor for the weighted value of the keyboard machine behavior is ***Q₂*,** and the defined weighted factor of the operation flow machine behavior for the weighted value of the operation flow machine behavior is ***Q₃*.** Then the weighted value of each machine behavior is multiplied with its corresponding weighted factor and then the multiplication results are added up to obtain the weighted value of machine behavior, i.e., **W=W₁×Q₁** + **W₂×Q₂** + **W₃×Q₃.**

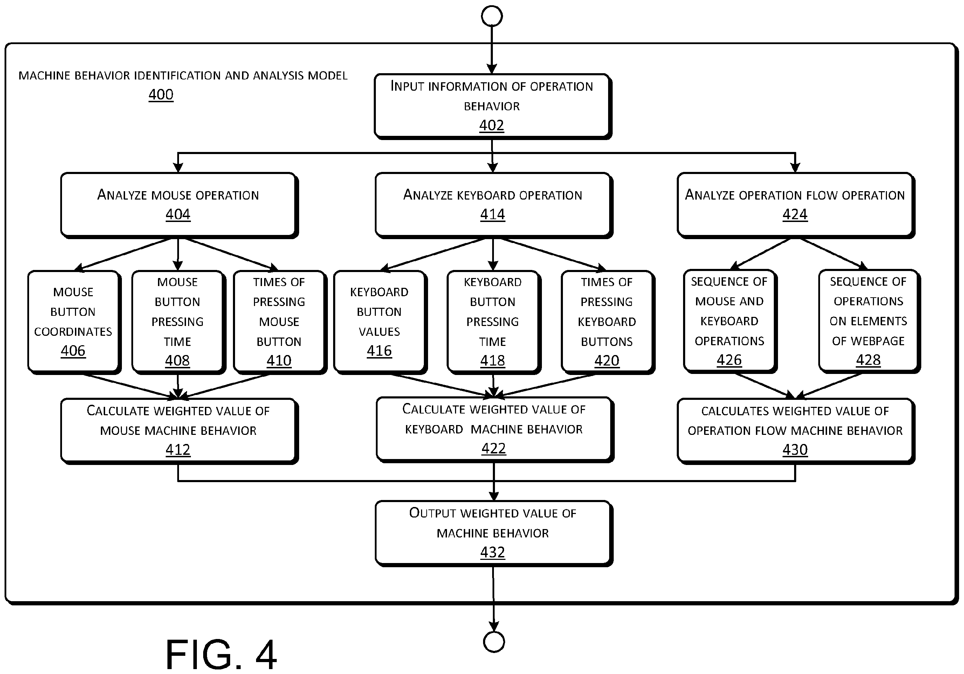

In determining the machine behavior on the webpage, a machine behavior identification and analysis model may be established. FIG. 4 illustrates an example machine behavior identification and analysis model 400.

The web server may use the machine behavior identification and analysis model 400 to analyze the mouse operation. At 402, the information of user's operation behavior on the webpage is input into the machine behavior identification and analysis model. At 404, the machine behavior identification and analysis model analyzes the mouse operation information. The mouse operation information may include, for example, the mouse button coordinates 406, the mouse button pressing time 408, and the number of times of pressing the mouse button 410. At 412, the machine behavior identification and analysis model calculates the weighted value of the mouse machine behavior based on the analysis of the mouse operation information.

At 414, the machine behavior identification and analysis model analyzes the keyboard operation information. The keyboard operation information may include, for example, the keyboard button values 416, the keyboard button pressing time 418, and the number of times of pressing the keyboard buttons 420. At 422, the machine behavior identification and analysis model calculates the weighted value of the keyboard machine behavior based on the analysis of the mouse operation information.

At 424, the machine behavior identification and analysis model analyzes the operation flow information. The various operation flow information may include, for example, the sequence of the mouse and the keyboard operations 426 and the sequence of operations on elements of the webpage 428. At 430, the machine behavior identification and analysis model calculates the weighted value of the operation flow machine behavior based on the analysis of the various operation flow information.

At 432, the machine behavior and analysis model determined the weighted value of machine behavior based on the calculated weighted values of various operation information such as the calculated weighted value of mouse machine behavior, the calculated weight value of keyboard machine behavior, and the calculated weighted value of operation flow machine behavior.

There are various methods including but not limited to the following two example model establishing methods to establish the machine behavior identification and analysis model.

In one example model establishing method, with respect to a respective user that corresponds to respective user ID information, for each webpage that requires determining machine behavior, multiple information of the user's operation behavior on each webpage are learned and trained to establish the machine behavior identification and analysis model for a respective webpage. The subsequently received information of the user's operation behavior on the webpage is input into the machine behavior identification and analysis model to analyze. The analysis result is used to determine the weighted value of machine behavior for the user's operation behavior on the respective webpage. The user ID information may be, for example, IP address information or MAC address information. When the web browser collects the information of the user's operation behavior on the webpage, it records the user ID information, and sends it together with the information of operation behavior to the web server. Based on the user ID information, the web server determines the user that corresponds to the received information of operation behavior, and further searches the machine behavior identification and analysis model corresponding to the user.

In another example model establishing method, for each webpage that requires determining machine behavior, a respective machine behavior identification and analysis model is established. When the information of the user's operation behavior on the respective webpage is subsequently received, such information is input into the respective machine behavior identification and analysis model to analyze. The analysis result is used to determine the weighted value of the user's machine behavior on the respective webpage.

At 308, the web server determines that the user's operation behavior on the webpage is machine behavior in response to determining that the weighted value of machine behavior from the user to the webpage is not less than a defined threshold.

The defined threshold to determine machine behavior is preset. If the weighted value of machine behavior is less than the defined threshold, the user's operation behavior on the webpage is not determined to be machine behavior. If the weighted value of machine behavior is not less than the defined threshold, the user's operation behavior on the webpage is determined to be machine behavior.

After determining that the user's operation behavior on the webpage is machine behavior, there is no need to process the user's operating request, thereby saving lots of processing resources of the web server, increasing the processing efficiency of the web server, and conserving lots of the storage resources of the web server. In addition, after the web server determines that the user's operation behavior on the webpage is machine behavior, it may, but are not limited to, send the result of determining to the web browser. After receiving the result of determining, the web browser may also provide the result to the user.

In order to improve the efficiency of the web server in determining machine behavior and saving the processing resources of the web server, the present techniques also provide that, after determining that a respective user's operating behavior to the webpage is machine behavior, the web server may add the user's user ID information into a malicious users list. In the future, when the web server receives the operation request from the web browser, it may firstly check whether the user ID information in the received operation request is found in the malicious users list. If the result is positive, the web server will refuse to process the user's operation request, and thus there is no need to perform operations to determine if the user's operation behavior on the webpage is machine behavior or not.

In addition, the present techniques also provide that the web server, after receiving the request to visit sent by the web browser, may firstly determine whether the user ID information in the request to visit is found in the malicious users list. If the result is positive, the web server may prohibit the user from visiting the webpage. Therefore, the user is prevented from sending subsequent operating request to the web server. The number of operation requests sent by users to the web server decreases, thereby reducing pressure on the web server and improving the processing speed and processing efficiency of the web server. For example, the user ID information may be the user's IP address information or the user's MAC address information.

Under the present techniques, when the user visits the webpage, the web browser obtains information of the user's operation behavior on the webpage and sends the obtained information of the operation behavior to the web server. The web server determines the weighted value of machine behavior based on the obtained information of the operation behavior to the web server. When the web server determines that the weighted value of machine behavior is not less than the defined threshold, the user's operation behavior on the webpage is determined as the machine behavior.

Thus, the present techniques do not rely on the IP address analysis method or the operation information analysis method to determine machine behavior. Rather, the present techniques use the user's operation behavior on the webpage to assess whether the operation behavior is machine behavior or not. This effectively increases the accuracy of determining machine behavior so that the web server may accurately distinguish the machine behavior and need not process the operating requests (such as the request to register, the request to log-in, the request to post, the request to reply, etc.) resulting from the machine behavior. The present techniques save processing resources of the web server, increase processing efficiency of the web server, and save storage resources of the web server.

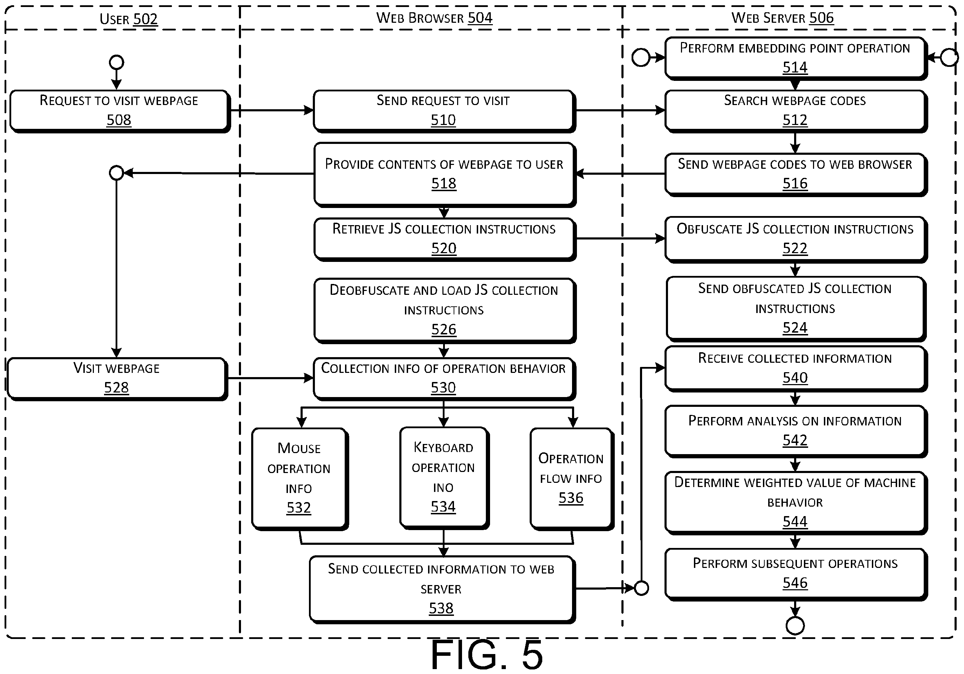

FIG. 5 illustrates a flowchart of an example method for determining machine behavior based on interaction among the user 502, the web browser 504, and the web server 506 in accordance with a second example embodiment of the present disclosure.

At 508, the user 502 requests to visit the webpage. At 510, the web browser 504 sends the request to visit to the web server 506. The request to visit includes web address information of the webpage that the user 502 request to visit. At 512, the web server 506, based on the web address information in the request to visit, searches the webpage codes that correspond to the webpage. At 514, the web server 506 performs the "embedding point" operation that inserts the retrieval instructions for retrieving the behavior collection instructions into the webpage codes. The found webpage codes include the inserted retrieval instructions for retrieving the behavior collection instructions. At 516, the web server 506 sends the found webpage codes to the web browser 504. At 518, the web browser 504, based on the received webpage code, provides the contents of the webpage to the user 502. At 520, the web browser 504, based on the retrieval instructions, sends a request to the web server 506 to retrieve the behavior collection instructions. For example, the behavior collection instructions may be JS collection instructions. When the web browser 504 executes at the "point" embedded in the webpage, it triggers retrieving the behavior collection instructions from the web server 506 according to the retrieval instructions, and embeds the retrieved behavior collection instructions into the webpage codes.

At 522, the web server 506, after receiving the request to retrieve the behavior collection instructions, performs real-time obfuscation computing of the behavior collection instructions such as the JS collection instructions. At 524, the web server 506 sends the obfuscated behavior collection instructions such as the JS collection instructions to the web browser 504. At 526, the web browser 504 performs deobfuscation computing of the received obfuscated behavior collection instructions to obtain deobfuscated behavior collection instructions such as the deobfuscated JS collection instructions, and loads the deobfuscated behavior instructions such as the deobfuscated JS collection instructions into the visiting process when the user 502 visits the webpage.

At 528, the user visits the webpage. At 530, when the user visits the webpage, the web browser 504 collects the information of the user's operation behavior on the webpage based on the loaded deobfuscated behavior collection instructions such as the loaded JS collection instructions. For example, the information of user's operation behavior on the webpage may include, but are not limited to, the mouse operation information 532, the keyboard operation information 534, and the operation flow information 536. At 538, after receiving the operation request from the user, the web browser 504 sends the collected information of user's operation behavior to the web server 506. The operation request may be a specific designated operation request, such as the request to register, the request to log-in, and the request to post.

At 540, the web server 506 receives the collected information of user's operation behavior. At 542, the web server 506 performs analysis on the information of user's operation behavior by using the machine behavior identification and analysis model. At 544, the web server 506, based on the results of the analysis, determines the weighted value of machine behavior. The web server 506, based on the weighted value of machine behavior, determines whether the user's operation behavior on the webpage is machine behavior or not. If the weighted value of machine behavior is not less than a defined threshold, then the user's operation behavior on the webpage is determined to be machine behavior. At 546, if it is determined that the user's operation behavior on the webpage is machine behavior, the web server 506 may perform one or more subsequent operations. For example, the operation request from the user would not be processed. The IP address information of the user would be added into the malicious users list. In the future, after receiving the request to visit sent by the web browser, the web server 506 firstly determine whether the IP address information included in the request to visit is among the malicious users list or not. If the result is positive, then the user is prohibited from visiting the webpage.

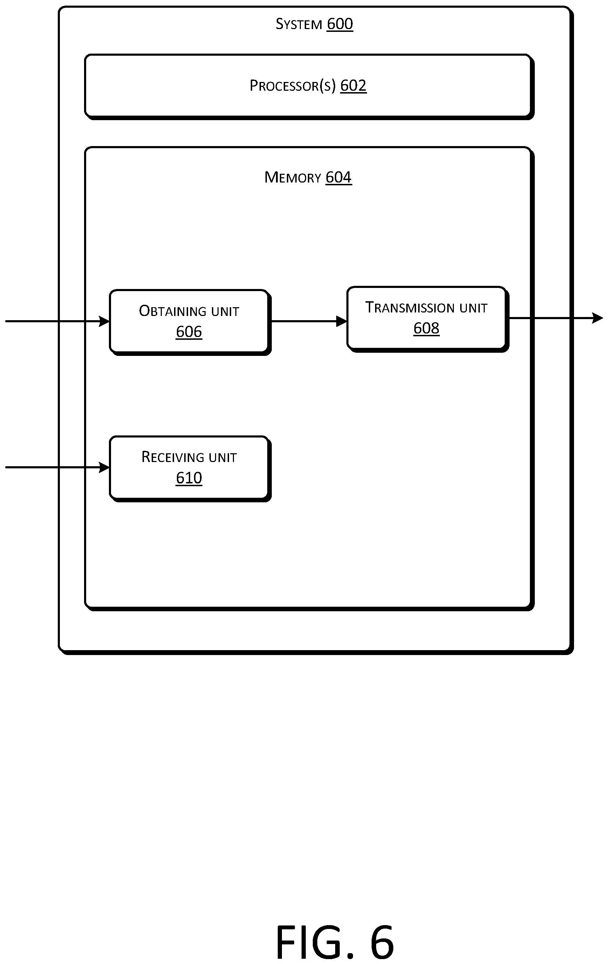

Corresponding to the example method for determining machine behavior in accordance with the first example embodiment of the present disclosure, a third example embodiment of the present disclosure provides an example web browser. FIG. 6 illustrates an example system 600 for implementing functionality of the web browser.

In one example, the system 600 may include, but is not limited to, one or more processors 602 and memory 604. The memory 604 may include computer-readable storage media in the form of volatile memory, such as random-access memory (RAM) and/or non-volatile memory, such as read only memory (ROM) or flash RAM.

Computer-readable storage media includes volatile and non-volatile, removable and non-removable media implemented in any method or technology for storage of information such as computer-executable instructions, data structures, program modules, or other data. Examples of computer storage media includes, but is not limited to, phase change memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that can be used to store information for access by a computing device. As defined herein, computer-readable storage media does not include transitory media such as modulated data signals and carrier waves.

The memory 604 may store therein program units or modules and program data. In one embodiment, the modules may include an obtaining unit 606, a transmission unit 608, and a receiving unit 610.

The obtaining unit 606 obtains the information of the user's operation behavior on the webpage when the user visits the webpage. The transmission unit 608 sends the information of operation behavior obtained by the obtaining unit 606 to the web server. The receiving unit 610 receives the result of determination sent by the web server that determines whether the user's operation behavior on the webpage is machine behavior. The web server makes the determination by determining the weighted value of machine behavior on the webpage based on the information of operation behavior received by the web server and by determining that the weighted value of machine behavior is not less than a defined threshold.

In one example embodiment, the obtaining unit 606 may include an obtaining sub-unit and a collecting sub-unit. The obtaining sub-unit obtains the behavior collection instructions from the web server when the user requests to visit the webpage. The collecting sub-unit collects the information of the user's operation behavior on the webpage based on the behavior collection instructions obtained by the obtaining sub-unit when the user visits the webpage.

In one example of the obtaining sub-unit, the obtaining sub-unit may include a first transmission module, a first receiving module, a first displaying module, and a first collecting module. The first transmission module sends the request to visit to the web serve when the user requests to visit the webpage. The request to visit includes web address information of the web page. The first receiving module receives the webpage codes sent by the web server. The webpage codes include the behavior collection instructions. The webpage codes are searched and found by the web server based on the web address information of the webpage. The first displaying module provides contents of the webpage to the user based on the webpage codes received by the first receiving module. The first collecting module collects the information of the user's operation behavior on the webpage based on the behavior collection instructions included in the webpage codes.

In another example of the obtaining sub-unit, the obtaining sub-unit may include a second transmission module, a second receiving module, a second displaying module, a retrieval module, a third receiving module, and a second collecting module. The second transmission module sends the request to visit that includes the web address information of the webpage to the web server when the user requests to visits the webpage. The second receiving module receives the webpage codes sent by the web server. The webpage codes include retrieval instructions for retrieving behavior collection instructions. The webpage codes are searched and found by the web server based on the web address information. The second displaying module displays contents of the webpage to the user based on the webpage codes received by the second receiving module. The retrieval module sends the request to retrieve behavior collection instructions to the web server based on the retrieval instructions. The third receiving module receives the behavior collection instructions sent by the web server. The second collecting module collects the information of the user's operation behavior on the webpage based on the received behavior collection instructions.

In one example of the second collecting module, the second collecting module includes a deobfuscation sub-module and a collecting sub-module. The deobfuscation sub-module performs deobfuscation computing of the behavior collection instructions received by the third receiving module based on the preset deobfuscation algorithm. The collecting sub-module collects the information of the user's operation behavior on the webpage based on the deobfuscated behavior collection instructions obtained by the deobfuscation sub-module.

In one example, corresponding relationships between one or more deobfuscation algorithms and various time periods are pre-established. The deobfuscation sub-module, according to a time period during which the request for retrieval instructions is sent, searches the deobfuscation algorithm that correspond to the time period based on the corresponding relationship between each time period and the corresponding deobfuscation algorithm. Then the deobfuscation sub-module performs deobfuscation computing of the behavior collection instructions by using the found de obfuscation algorithm.

In another example of the obtaining unit 606, when a defined point-in-time arrives, the obtaining unit 606 may send to the web server all information of the user's operation behavior on the webpage during a time period ranging from a previous defined point-in-time to the current defined point-in-time.

In another example of the obtaining unit 606, the obtaining unit 606 may include a receiving sub-unit and a transmission sub-unit. The receiving sub-unit receives a designated operation request sent by the user. The transmission sub-unit sends the user's operation behavior on the webpage to the web server after the receiving sub-unit receives the designated operation request.

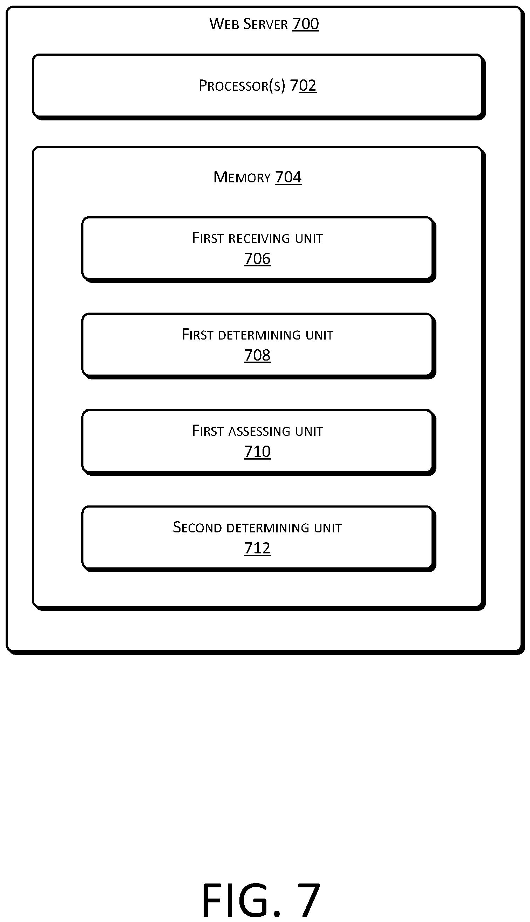

Corresponding to the example method for determining machine behavior in accordance with the first example embodiment of the present disclosure, a fourth example embodiment of the present disclosure provides an example web server. FIG. 7 illustrates an example web server 700. The web server 700 may include, but is not limited to, one or more processors 702 and memory 704. The memory 704 may include computer-readable storage media in the form of volatile memory, such as random-access memory (RAM) and/or non-volatile memory, such as read only memory (ROM) or flash RAM.

The memories 704 may store therein program units or modules and program data. In one embodiment, the modules may include a first receiving unit 706, a first determining unit 708, a first assessing unit 710, and a second determining unit 712.

The first receiving unit 706 receives the information of user's operation behavior on the webpage sent by the web browser. The first determining unit 708, based on the information of user's operation behavior receiving by the first receiving unit 706, determines the weighted value of machine behavior of the user's operation behavior on the webpage. The first assessing unit 710 assesses whether the weighted value of machine behavior determined by the first determining unit 708 is less than a defined threshold. The second determining unit 712 determines that the operating behavior of the user to the webpage is a machine behavior if a determining result of the first assessment unit 710 is negative.

In another embodiment, the modules may further include a second receiving unit, a first searching unit, and a first transmission unit. The second receiving unit receives the request to visit sent by the web browser before the first receiving unit 706 receives the information of user's operation behavior on the webpage sent by the web browser. The request to visit includes web address information of the webpage. The first searching unit, based on the web address information in the request to visit received by the second receiving unit, searches the webpage codes of the webpage that corresponds to the web address information of the webpage. The webpage codes include the behavior collection instructions. The first transmission unit sends the webpage codes found by the first searching unit to the web browser.

In another example embodiment of the web server, the modules in the web server may further include a third receiving unit, a second searching unit, a second transmission unit, a fourth receiving unit and a third transmission unit.

The third receiving unit receives the request to visit sent by the web browser before the first receiving unit 706 receives the information of user's operation behavior on the webpage sent by the web browser. The request to visit includes web address information of the webpage. The second searching unit, based on the web address information in the request to visit received by the second receiving unit, searches the webpage codes of the webpage that corresponds to the web address information of the webpage. The webpage codes include the behavior collection instructions. The second transmission unit sends the webpage codes found by the first searching unit to the web browser. The fourth receiving unit receives the request, sent by the web browser, for retrieving behavior collection instructions. The third transmission unit sends the behavior collection instructions to the web browser after the fourth receiving unit receives the request for retrieving behavior collection instructions.

In one example, the third transmission unit may include an obfuscation sub-unit and a transmission sub-unit. The obfuscation sub-unit, based on the predefined obfuscation algorithm, performs obfuscation computing on the behavior collection instructions. The transmission sub-unit sends the behavior collection instructions obfuscated by the obfuscation sub-unit to the web browser.

For instance, the obfuscation sub-unit may include a searching module and an obfuscation module. The searching module, according to a time period during which the request for retrieval instructions is received by the fourth receiving unit, searches the obfuscation algorithm that correspond to the time period based on the corresponding relationship between each time period and the corresponding obfuscation algorithm. The obfuscation module performs obfuscation computing of the behavior collection instructions by using the found obfuscation algorithm.

In one example embodiment, the information of operation behavior received by the first receiving unit 706 may include the mouse operation information, the keyboard operation information, and the operation flow information. In one example, the first determining unit 708 may include a first determining sub-unit, a second determining sub-unit, a third determining sub-unit, and a fourth determining sub-unit. The first determining sub-unit determines the weighted value of mouse machine behavior based on the mouse operation information included in the information of operation behavior received by the first receiving unit 706. The second determining sub-unit determines the weighted value of keyboard machine behavior based on the keyboard operation information included in the information of operation behavior received by the first receiving unit 706. The third determining sub-unit determines the weighted value of operation flow machine behavior based on the operation flow information included in the information of operation behavior received by the first receiving unit 706. The fourth determining unit determines the weighted value of machine behavior based on the weighted value of mouse machine behavior, the weight value of keyboard machine behavior, and the weighted value of operation flow machine behavior.

In another embodiment of the web server, the modules in the web server may further include an adding unit. The adding unit adds the user's user ID information into a malicious users list after the second determining unit 712 determines that the user's operation behavior on the webpage is machine behavior.

In another example embodiment of the web server, the modules in the web server may further include a fifth receiving unit, a second assessing unit, and a first processing unit. The fifth receiving unit receives the operation request sent by the web browser. The operation request includes the user ID information. For example, the operation request may be a specific predefined operation request, such as the request to register and the request to log-in. For another example, the operation request may be any request for operation sent by the web browser. The second assessing unit checks whether the user ID information in the received operation request is found in the malicious users list after the fifth receiving unit receives the operation request. The first processing unit stops processing the user's operation request if the result of determining from the second assessing unit is positive.

In another example embodiment of the web server, the modules in the web server may further include a sixth receiving unit, a third assessing unit, and a second processing unit. The sixth receiving unit receives the request to visit sent by the web browser when the user requests to visit the webpage. The request to visit includes user ID information. The third assessing unit determines whether the user ID information in the request to visit is found in the malicious users list after the sixth receiving unit receives the request to visit. The second processing unit prohibits the user from visiting the webpage.

From the example embodiments described above, one of ordinary skill in the art can clearly understand that the disclosed method and system may be implemented using software and universal hardware platform. Based on this understanding, the technical scheme of the present disclosure, or portions contributing to existing technologies, may be implemented in the form of software products which are stored in a computer storage media such as ROM/RAM, hard drive and optical disk. The software includes computer-executable instructions for a computing device (e.g., personal computer, server or networked device) to execute the method described in the example embodiments of the present disclosure.

The various example embodiments are progressively described in the present disclosure. Same or similar portions of the example embodiments can be mutually referenced. Each example embodiment has a different focus than other example embodiments. In particular, the example device embodiment has been described in a relatively simple manner because of its fundamental correspondence with the example method. Details thereof can be found with reference to related portions of the example method. Descriptions of the above example device are meant for illustrative purpose only. Units or modules described as separate components therein may or may not be physically separated. The modules or units described in the embodiments may be merged into one module or be further divided into multiple sub-modules. One or more modules or units described in one embodiment may be merged into another embodiment. Components illustrated in terms of units or modules may or may not be physical units, e.g., may be located in one place or may be distributed among multiple network units. Depending on the actual needs, the goal of the example embodiments may be achieved by selecting parts or all of the modules. One of ordinary skill in the art can understand and implement the disclosed system without any innovative effect.

The present disclosure is described by reference to the flowcharts and diagrams of the method, apparatus (system), and computer software product of the present disclosure. It can be understood that computer-executable instructions can implement each flowchart and/or diagram of the figures, or a combination thereof. Such computer-executable instructions can be embedded into a general-purpose computer, a special-purpose computer, an embedded device or any other programmable data processing device to implement a machine that can use the instructions executed by the computer or other programmable data processing device to realize functions designated by one or more flow processes of the flowchart figures and/or one or more diagrams of the diagram figures.

Such computer-executable instructions may also be loaded into the computer or any other programmable data processing device such that the computer or the programmable data processing device can perform a plurality of operation steps to realize functions by operation of such computer. Thus, the computer-executable instructions performed at the computer or any other programmable data processing device implement functions designated by one or more flow processes of the flowchart figures and/or one or more diagrams of the diagram figures.

The present disclosure may be described within a general context of computer-executable instructions executed by a computer, such as a program module. Generally, a program module includes routines, programs, objects, modules, data structure, computer-executable instructions etc., for executing specific tasks or implementing specific abstract data types. The disclosed method and device may also be implemented in a distributed computing environment. In the distributed computing environment, a task is executed by remote processing devices which are connected through a communication network. In distributed computing environment, the program modules may be located in computer storage media (which include storage devices) of local and/or remote computers.

The disclosed method and system may be used in an environment or in a configuration of universal computer systems with software or specialized computer systems. Examples include a personal computer, a server computer, a handheld device or a portable device, a tablet device, a multi-processor system, a microprocessor-based system, a set-up box, a programmable customer electronic device, a network PC, a small-scale computer, a large-scale computer, and a distributed computing environment including any system or device above.

Above are example embodiments of the present disclosure. However, the present disclosure is not limited hereto. The terminologies used herein are for illustration purposes, and not for limiting the present disclosure. Since the present disclosure can be specifically implemented using many forms without deviating from the scope of the appended claims, the above example embodiments are not limited to the details discussed above, and should be broadly interpreted under the scope defined in the claims. It is to be appreciated that one of ordinary skill in the art may alter or modify the present disclosure in many different ways without departing from the scope of this disclosure as defined by the claims.

## Claims

1. A method performed by one or more processors (602) configured with computer-executable instructions, the method comprising:
receiving (102) a request (508) to visit a webpage from a web browser (504) when a user (502) requests to visit the webpage through the web browser (504), the request to visit the webpage including web address information of the webpage;
receiving (302, 530) information of a user's operation behavior on the webpage, wherein the operation behavior includes mouse operation information (532), keyboard operation information (534), and operation flow information (536), and wherein further the receiving (302) information of the user's operation behavior (532, 534, 536) on the webpage comprises:
searching (106, 512) webpage codes corresponding to the webpage based on the web address information;
inserting retrieval instructions, for retrieving behavior collection instructions from a web server (506), into the webpage codes;
sending (108, 304, 516) the webpage codes including the retrieval instructions to the web browser (504);
after receiving a retrieval request (520) from the web browser (504) to retrieve the behavior collection instructions based on the retrieval instructions, performing (522) obfuscation computing of the behavior collection instructions based on a preset obfuscation algorithm and sending (524) the obfuscated behavior collection instructions to the web browser (504); and
receiving (540) the information of the user's operation behavior (532, 534, 536) on the webpage that are collected (530) by the web browser (504) based on the behavior collection instructions;
calculating (306, 544) a weighted value of machine behavior (432) based on the information of the user's operation behavior (532, 534, 536);
determining (308, 546) whether the user's operation behavior (532, 534, 536) is a machine behavior based on the weighted value of machine behavior (432); and
if the weighted value of machine behavior (432) is no less than a defined threshold, determining (308, 546) that the user's operation behavior (532, 534, 536) is machine behavior.

2. The method as recited in claim 1, wherein
the method further comprises selecting one or more obfuscation algorithms for use in the obfuscation computing (522) based on a time period within which the retrieval request (520) is received.

3. The method as recited in any preceding claim, wherein the calculating (306, 544) the weighted value of machine behavior (432) comprises:
determining (412) a weighted value of mouse machine behavior based on the mouse operation information (532);
determining (422) a weighted value of keyboard machine behavior based on the keyboard operation information (534);
determining (430) a weighted value of operation flow machine behavior based on the operation flow information (536); and
determining (306, 544) the weighted value of the machine behavior (432) based on the weighted value of the mouse machine behavior (532), the weighted value of the keyboard machine behavior (534), and the weighted value of the operation flow machine behavior (536).

4. The method as recited in any foregoing claim, further comprising adding (546) user ID information of the user into a malicious users list if the user's operation behavior (532, 534, 536) is determined to be machine behavior.

5. The method as recited in any of claims 1 to 4, wherein the request (508) to visit the webpage further includes user ID information of the user and the method further comprising:
determining whether the user ID information is included in a malicious users list; and
refusing to process the request (508) to visit the webpage if the user ID information is included in the malicious users list.

6. The method as recited in any of claims 1 to 4, wherein the request (508) to visit the webpage further includes user ID information of the user and the method further comprises:
determining whether the user ID information is included in a malicious users list; and
prohibiting the user from visiting the webpage in response to determining that the user ID information is included in the malicious users list.

7. The method as recited in any preceding claim, further comprising:
obtaining the information of the user's operation behavior (532, 534, 536) on the webpage;
sending (538) the obtained information of the user's operation behavior (532, 534, 536) to the web server (506);
receiving from the web server (506) a result of the determining that the user's operation behavior is machine behavior based on the user's operation behavior (532, 534, 536).

8. The method as recited in claim 7, wherein the obtaining information of the user's operation behavior (532, 534, 536) on the webpage comprises:
obtaining behavior collection instructions from the web server (506) when the user (502) requests (508) to visit the webpage; and
collecting (530) the user's operation behavior (532, 534, 536) on the webpage when the user (502) visits (528) the webpage based on the behavior collection instructions.

9. The method as recited in claim 8, wherein the obtaining behavior collection instructions from the web server (506) when the user (502) requests (508) to visit the webpage comprises:
sending a request to visit to the web server (506) when the user (502) requests (508) to visit the webpage, the request (508) to visit including web address information of the webpage; and
receiving webpage codes found by the web server (506) based on the web address information, the webpage codes including the behavior collection instruction obtained from the web server (506).

10. The method as recited in any of claims 7 to 9, wherein the sending (538) the obtained information of the user's operation behavior (532, 534, 536) to the web server (506) comprises when a preset point in time arrives, sending (538) the obtained information of operation behavior (532, 534, 536) on the webpage during a time period, ranging from a preceding defined point in time to the preset point in time.

11. The method as recited in any of claims 7 to 10, further comprising prior to obtaining information of the user's operation behavior (532, 534, 536) on the webpage, determining that the request (508) from the user (502) to visit the webpage is a designated operation request.

12. The method as recited in any of claims 7 to 11, further comprising the web browser (504) sending the user's operation behavior (532, 534, 536) to the web server (506) according to a schedule;
and wherein optionally multiple points in time are preset, and, when a preset point in time arrives, the web browser (504) sends the user's operation behavior (532, 534, 536) to the web server (506).

13. A system (600) comprising:
one or more processors (602);
one or more computer storage media (604) having stored thereupon a plurality of computer-executable instructions that, when executed by the one or more processors (602), causes the one or more processors (602) to perform actions comprising:
receiving (102) a request (508) to access a webpage from a web browser (504) when a user (502) requests to visit the webpage through the web browser (504), the request (508) to access the webpage including web address information of the webpage;
searching (106, 512) webpage codes corresponding to the webpage based on the web address information;
inserting retrieval instructions, for retrieving behavior collection instructions from a web server (506), into the webpage codes;
sending (108, 304, 516) the webpage codes including the retrieval instructions to the web browser (504);
sending (524) the behavior collection instructions to the web browser (504) after receiving a retrieval request (520) from the web browser (504) to retrieve the behavior collection instructions based on the retrieval instructions, the sending including:
performing (522) obfuscation computing of the behavior collection instructions based on a preset obfuscation algorithm; and
sending (524) the obfuscated behavior collection instructions to the web browser (504); and
receiving (540) the information of the user's operation behavior (532, 534, 536) on the webpage collected (530) by the web browser (504) based on the behavior collection instructions, wherein the operation behavior (532, 534, 536) includes mouse operation information (532), keyboard operation information (534), and operation flow information (536);
calculating (306, 544) a weighted value of machine behavior (432) based on the information of the user's operation behavior (532, 534, 536); and
determining (308, 546) whether the user's operation behavior (532, 534, 536) is a machine behavior based on the weighted value of machine behavior (432) ; and
if the weighted value of machine behavior (432) is no less than a defined threshold, determining (308, 546) that the user's operation behavior (532, 534, 536) is machine behavior.

14. A machine readable medium containing instructions which when read by a computer cause one or more processors (602) on that computer to perform the following method:
receive (102) a request (508) to visit a webpage from a web browser (504) when a user (502) requests to visit the webpage through the web browser (504), the request to visit the webpage including web address information of the webpage;
receive (302, 530) information of a user's operation behavior on the webpage, wherein the operation behavior includes mouse operation information (532), keyboard operation information (534), and operation flow information (536), and wherein further the receiving (302) information of the user's operation behavior (532, 534, 536) on the webpage comprises:
searching (106, 512) webpage codes corresponding to the webpage based on the web address information;
inserting retrieval instructions, for retrieving behavior collection instructions from a web server (506), into the webpage codes;
sending (108, 304, 516) the webpage codes including the retrieval instructions to the web browser (504);
after receiving a retrieval request (520) from the web browser (504) to retrieve the behavior collection instructions based on the retrieval instructions, performing (522) obfuscation computing of the behavior collection instructions based on a preset obfuscation algorithm and sending (524) the obfuscated behavior collection instructions to the web browser (504); and
receiving (540) the information of the user's operation behavior (532, 534, 536) on the webpage that are collected (530) by the web browser (504) based on the behavior collection instructions;
calculate (306, 544) a weighted value of machine behavior (432) based on the information of the user's operation behavior (532, 534, 536);
determine (308, 546) whether the user's operation behavior (532, 534, 536) is a machine behavior based on the weighted value of machine behavior (432); and
if the weighted value of machine behavior (432) is no less than a defined threshold, determine (308, 546) that the user's operation behavior (532, 534, 536) is machine behavior.

## Patentansprüche

1. Verfahren, durchgeführt von einem oder mehreren Prozessoren (602), die mit computerausführbaren Anweisungen konfiguriert sind, wobei das Verfahren umfasst:
Empfangen (102) einer Anforderung (508) zum Besuchen einer Webseite von einem Webbrowser (504), wenn ein Benutzer (502) anfordert die Webseite durch den Webbrowser (504) zu besuchen, wobei die Anforderung zum Besuchen der Webseite Webadresseninformationen der Webseite enthält;
Empfangen (302, 530) von Informationen über das Betriebsverhalten eines Benutzers auf der Webseite, wobei das Betriebsverhalten Mausbetriebsinformationen (532), Tastaturbetriebsinformationen (534) und Betriebsflussinformationen (536) enthält, und wobei ferner das Empfangen (302) der Informationen über das Betriebsverhalten des Benutzers (532, 534, 536) auf der Webseite umfasst:
Suchen (106, 512) von Webseitencodes, die der Webseite entsprechen, auf Grundlage der Webadresseninformationen;
Einfügen von Abrufanweisungen zum Abrufen von Verhaltenssammlungsanweisungen von einem Webserver (506) in die Webseitencodes;
Senden (108, 304, 516) des Webseitencodes, einschließlich der Abrufanweisungen, an den Webbrowser (504);
nach Empfangen einer Abrufanforderung (520) von dem Webbrowser (504) zum Abrufen der Verhaltenssammlungsanweisungen auf Grundlage der Abrufanweisungen, Durchführen (522) von Obfuskationsberechnungen der Verhaltenssammlungsanweisungen auf Grundlage eines vorher festgelegten Obfuskationsalgorithmus und Senden (524) der obfuskierten Verhaltenssammlungsanweisungen an den Webbrowser (504); und
Empfangen (540) der Informationen über das Betriebsverhalten des Benutzers (532, 534, 536) auf der Webseite, die von dem Webbrowser (504) auf Grundlage der Verhaltenssammlungsanweisungen gesammelt (530) werden;
Berechnen (306, 544) eines gewichteten Werts des Maschinenverhaltens (432) auf Grundlage der Informationen des Betriebsverhaltens des Benutzers (532, 534, 536);
Feststellen (308, 546), ob das Betriebsverhalten des Benutzers (532, 534, 536) ein Maschinenverhalten ist, auf Grundlage des gewichteten Werts des Maschinenverhaltens (432); und
falls der gewichtete Wert des Maschinenverhaltens (432) nicht weniger als ein definierter Schwellenwert ist, Feststellen (308, 546), dass das Betriebsverhalten des Benutzers (532, 534, 536) Maschinenverhalten ist.

2. Verfahren nach Anspruch 1, wobei
das Verfahren ferner das Auswählen eines oder mehrerer Obfuskationsalgorithmen zur Verwendung bei der Obfuskationsberechnung (522) auf Grundlage eines Zeitraums umfasst, in dem die Abrufanforderung (520) erhalten wird.

3. Verfahren nach einem der vorstehenden Ansprüche, wobei das Berechnen (306, 544) des gewichteten Werts des Maschinenverhaltens (432) umfasst:
Feststellen (412) eines gewichteten Werts von Maus-Maschinenverhalten auf Grundlage der Mausbetriebsinformationen (532);
Feststellen (422) eines gewichteten Werts des Tastatur-Maschinenverhaltens auf Grundlage der Tastaturbetriebsinformationen (534);
Feststellen (430) eines gewichteten Werts des Betriebsfluss-Maschinenverhaltens auf Grundlage der Betriebsflussinformationen (536); und
Feststellen (306, 544) des gewichteten Werts des Maschinenverhaltens (432) auf Grundlage des gewichteten Werts des Maus-Maschinenverhaltens (532), des gewichteten Werts des Tastatur-Maschinenverhaltens (534) und des gewichteten Werts des Betriebsfluss-Maschinenverhaltens (536).

4. Verfahren nach einem der vorstehenden Ansprüche, ferner das Hinzufügen (546) von Benutzer-ID-Informationen des Benutzers in eine Liste böswilliger Benutzer umfassend, falls das Benutzerbetriebsverhalten (532, 534, 536) als Maschinenverhalten festgestellt wird.

5. Verfahren nach einem der Ansprüche 1 bis 4, wobei die Anforderung (508) zum Besuchen der Webseite ferner Benutzer-ID-Informationen des Benutzers enthält und das Verfahren ferner umfasst:
Feststellen, ob die Benutzer-ID-Informationen in einer Liste böswilliger Besucher enthalten sind; und
Ablehnen der Verarbeitung der Anforderung (508) zum Besuchen der Webseite, falls die Benutzer-ID-Informationen in der Liste böswilliger Benutzer enthalten sind.

6. Verfahren nach einem der Ansprüche 1 bis 4, wobei die Anforderung (508) zum Besuchen der Webseite ferner Benutzer-ID-Informationen des Benutzers enthält und das Verfahren ferner umfasst:
Feststellen, ob die Benutzer-ID-Informationen in einer Liste böswilliger Besucher enthalten sind; und Verbieten eines Besuches des Benutzers der Webseite in Reaktion auf das Feststellen, dass die Benutzer-ID-Informationen auf der Liste böswilliger Benutzer enthalten sind.

7. Verfahren nach einem der vorstehenden Ansprüche, ferner umfassend:
Erhalten der Informationen über das Betriebsverhalten des Benutzers (532, 534, 536) auf der Webseite;
Senden (538) der erhaltenen Informationen über das Betriebsverhalten des Benutzers (532, 534, 536) an den Webserver (506);
Empfangen von dem Webserver (506) eines Resultats des Feststellens, dass das Betriebsverhalten des Benutzers Maschinenverhalten ist auf Grundlage des Betriebsverhaltens des Benutzers (532, 534, 536).

8. Verfahren nach Anspruch 7, wobei das Erhalten der Informationen über das Betriebsverhalten des Benutzers (532, 534, 536) auf der Webseite umfasst:
Erhalten von Verhaltenssammlungsanweisungen von dem Webserver (506), wenn der Benutzer (502) anfordert (508) die Webseite zu besuchen; und
Sammeln (530) des Betriebsverhaltens des Benutzers (532, 534, 536) auf der Webseite, wenn der Benutzer (502) die Website besucht (528) auf Grundlage der Verhaltenssammlungsanweisungen.

9. Verfahren nach Anspruch 8, wobei das Erhalten der Verhaltenssammlungsanweisungen von dem Webserver (506), wenn der Benutzer (502) anfordert (508) die Webseite zu besuchen, umfasst:
Senden einer Anforderung zum Besuchen an den Webserver (506), wenn der Benutzer (502) anfordert (508) die Webseite zu besuchen, wobei die Anforderung (508) zum Besuchen die Webadresseninformationen der Webseite enthält; und
Empfangen von Webseitencodes, die von dem Webserver (506) auf Grundlage der Webadresseninformationen gefunden werden, wobei die Webseitencodes die Verhaltenssammlungsanweisungen, die von dem Webserver (506) erhalten wurden, enthält.

10. Verfahren nach einem der Ansprüche 7 bis 9, wobei das Senden (538) der erhaltenen Informationen über das Betriebsverhalten des Benutzers (532, 534, 536) an den Webserver (506), wenn ein vorher festgelegter Zeitpunkt erreicht wird, das Senden (538) der erhaltenen Informationen über das Betriebsverhalten (532, 534, 536) auf der Webseite während eines Zeitraums umfasst, der von einem vorhergehenden, definierten Zeitpunkt bis zu dem im Voraus festgelegten Zeitpunkt reicht.

11. Verfahren nach einem der Ansprüche 7 bis 10, vor dem Erhalt der Informationen über das Betriebsverhalten des Benutzers (532, 534, 536) auf der Webseite ferner das Feststellen umfassend, dass die Anforderung (508) von dem Benutzer (502) zum Besuchen der Webseite eine designierte Betriebsanforderung ist.

12. Verfahren nach einem der Ansprüche 7 bis 11, ferner umfassend das Senden durch den Webbrowser (504) des Betriebsverhaltens des Benutzers (532, 534, 536) an den Webserver (506) gemäß einem Zeitplan;
und wobei optional im Voraus mehrere Zeitpunkte festgelegt werden, und, wenn ein im Voraus festgelegter Zeitpunkt eintritt, sendet der Webbrowser (504) das Betriebsverhalten des Benutzers (532, 534, 536) an den Webserver (506).

13. System (600) umfassend:
einen oder mehrere Prozessoren (602);
ein oder mehrere Computerspeichermedium/-medien (604) auf dem/denen mehrere computerausführbare Anweisungen gespeichert sind, die wenn sie von dem einen oder den mehreren Prozessor/en (602) ausgeführt werden, den einen oder die mehreren Prozessor/en (602) veranlassen, die Aktionen durchzuführen, die umfassen:
Empfangen (102) einer Anforderung (508) zum Zugreifen auf eine Webseite von einem Webbrowser (504), wenn ein Benutzer (502) anfordert die Webseite durch den Webbrowser (504) zu besuchen, wobei die Anforderung (508) zum Zugreifen auf die Webseite Webadresseninformationen der Webseite enthält;
Suchen (106, 512) von Webseitencodes, die der Webseite entsprechen, auf Grundlage der Webadresseninformationen;
Einfügen von Abrufanweisungen zum Abrufen von Verhaltenssammlungsanweisungen von einem Webserver (506) in die Webseitencodes;
Senden (108, 304, 516) des Webseitencodes, einschließlich der Abrufanweisungen, an den Webbrowser (504);
Senden (524) der Verhaltenssammlungsanweisungen an den Webbrowser (504) nach Empfangen einer Abrufanforderung (520) von dem Webbrowser (504) zum Abrufen der Verhaltenssammlungsanweisungen auf Grundlage der Abrufanweisungen, wobei das Senden beinhaltet:
Durchführen (522) von Obfuskationsberechnung der Verhaltenssammlungsanweisungen auf Grundlage eines im Voraus festgelegten Obfuskationsalgorithmus; und
Senden (524) der obfuskierten Verhaltenssammlungsanweisungen an den Webbrowser (504); und
Empfangen (540) der Informationen über das Betriebsverhalten des Benutzers (532, 534, 536), die auf der Webseite durch den Webbrowser (504) auf Grundlage der Verhaltenssammlungsanweisungen gesammelt (530) wurden, wobei das Betriebsverhalten (532, 534, 536) Mausbetriebsinformationen (532), Tastaturbetriebsinformationen (534) und Betriebsflussinformationen (536) beinhaltet;
Berechnen (306, 544) eines gewichteten Werts des Maschinenverhaltens (432) auf Grundlage der Informationen des Betriebsverhaltens des Benutzers (532, 534, 536); und
Feststellen (308, 546), ob das Betriebsverhalten des Benutzers (532, 534, 536) ein Maschinenverhalten ist, auf Grundlage des gewichteten Werts des Maschinenverhaltens (432); und
falls der gewichtete Wert des Maschinenverhaltens (432) nicht weniger als ein definierter Schwellenwert ist, Feststellen (308, 546), dass das Betriebsverhalten des Benutzers (532, 534, 536) Maschinenverhalten ist.

14. Maschinenlesbares Medium, das Anweisungen enthält, die, wenn sie von einem Computer gelesen werden, einen oder mehrere Prozessor/en (602) auf diesem Computer veranlassen, das folgende Verfahren durchzuführen:
Empfangen (102) einer Anforderung (508) zum Besuchen einer Webseite von einem Webbrowser (504), wenn ein Benutzer (502) anfordert die Webseite durch den Webbrowser (504) zu besuchen, wobei die Anforderung zum Besuchen der Webseite Webadresseninformationen der Webseite enthält;
Empfangen (302, 530) von Informationen über das Betriebsverhalten des Benutzers auf der Webseite, wobei das Betriebsverhalten Mausbetriebsinformationen (532), Tastaturbetriebsinformationen (534) und Betriebsflussinformationen (536) enthält, und wobei ferner das Empfangen (302) der Informationen über das Betriebsverhalten des Benutzers (532, 534, 536) auf der Webseite umfasst:
Suchen (106, 512) von Webseitencodes, die der Webseite entsprechen, auf Grundlage der Webadresseninformationen;
Einfügen von Abrufanweisungen zum Abrufen von Verhaltenssammlungsanweisungen von einem Webserver (506) in die Webseitencodes;
Senden (108, 304, 516) des Webseitencodes, einschließlich der Abrufanweisungen, an den Webbrowser (504);
nach Empfangen einer Abrufanforderung (520) von dem Webbrowser (504) zum Abrufen der Verhaltenssammlungsanweisungen auf Grundlage der Abrufanweisungen,
Durchführen (522) von Obfuskationsberechnung der Verhaltenssammlungsanweisungen auf Grundlage eines im Voraus festgelegten Obfuskationsalgorithmus und Senden (524) der obfuskierten Verhaltenssammlungsanweisungen an den Webbrowser (504); und
Empfangen (540) der Informationen über das Betriebsverhalten des Benutzers (532, 534, 536) auf der Webseite, die von dem Webbrowser (504) auf Grundlage der Verhaltenssammlungsanweisungen gesammelt (530) werden;
Berechnen (306, 544) eines gewichteten Werts des Maschinenverhaltens (432) auf Grundlage der Informationen des Betriebsverhaltens des Benutzers (532, 534, 536);
Feststellen (308, 546), ob das Betriebsverhalten des Benutzers (532, 534, 536) ein Maschinenverhalten ist, auf Grundlage des gewichteten Werts des Maschinenverhaltens (432); und
falls der gewichtete Wert des Maschinenverhaltens (432) nicht weniger als ein definierter Schwellenwert ist, Feststellen (308, 546), dass das Betriebsverhalten des Benutzers (532, 534, 536) Maschinenverhalten ist.

## Revendications

1. Procédé effectué par un ou plusieurs processeurs (602) configurés avec des instructions exécutables sur ordinateur, le procédé comprenant :
la réception (102) d'une demande (508) pour visiter une page web d'un navigateur web (504) lorsqu'un utilisateur (502) demande à visiter la page web via le navigateur web (504), la demande de visite de la page web comprenant des informations d'adresse web de la page web ;
la réception (302, 530) d'informations d'un comportement d'exploitation de l'utilisateur sur la page web, dans lequel le comportement d'exploitation comprend des informations d'exploitation de souris (532), des informations d'exploitation de clavier (534) et des informations de flux d'exploitation (356), dans lequel, en outre, la réception d'informations (302) du comportement d'exploitation (532, 534, 536) de l'utilisateur sur la page web comprend :
la recherche (106, 512) de codes de page web correspondant à la page web sur la base d'informations d'adresse web ;
l'insertion d'instructions de récupération pour récupérer des instructions de collecte de comportement du serveur web (506) dans les codes de page web ;
l'envoi (108, 304, 516) des codes de page web comprenant les instructions de récupération au navigateur web (504) ;
après réception d'une demande de récupération (520) du navigateur web (504) pour récupérer les instructions de collecte de comportement sur la base des instructions de récupération, la réalisation d'un calcul de brouillage de collecte de comportement sur la base d'un algorithme de brouillage préétabli et l'envoi (524) des instructions de collecte de comportement brouillées au navigateur web (504) ; et
la réception (540) des informations du comportement d'exploitation (532, 534, 536) de l'utilisateur sur la page web qui sont recueillies (530) par le navigateur web (504) sur la base des instructions de collecte de comportement ;
le calcul (306, 544) d'une valeur pondérée de comportement machine (432) sur la base des informations du comportement d'exploitation (532, 534, 536) de l'utilisateur ;
la détermination (308, 546) du fait que le comportement d'exploitation (532, 534, 536) de l'utilisateur est ou non un comportement machine basé sur la valeur pondérée du comportement machine (432) ; et,
si la valeur pondérée du comportement machine (432) n'est pas inférieure à un seuil défini, la détermination (308, 546) que le comportement d'exploitation (532, 534, 536) de l'utilisateur est un comportement machine.

2. Procédé selon la revendication 1, dans lequel le procédé comprend en outre la sélection d'un ou plusieurs algorithmes de brouillage pour utilisation dans le calcul du brouillage (522) sur la base d'une période de temps dans laquelle la demande de récupération (520) est reçue.

3. Procédé selon l'une quelconque des revendications précédentes, dans lequel le calcul (306, 544) de la valeur pondérée du comportement machine (432) comprend :
la détermination (412) d'une valeur pondérée d'un comportement machine de souris sur la base des informations d'exploitation (532) de la souris ;
la détermination (422) d'une valeur pondérée du comportement machine de clavier sur la base des informations d'exploitation (534) du clavier ;
la détermination (430) d'une valeur pondérée du comportement machine de flux d'exploitation basée sur les informations de flux opératoires (536) ; et
la détermination (306, 544) de la valeur pondérée du comportement machine (432) basée sur la valeur pondérée du comportement machine de souris (532) de la valeur pondérée du comportement machine de clavier (534) et de la valeur pondérée du comportement machine de flux d'exploitation (536).

4. Procédé selon l'une quelconque des revendications précédentes, comprenant en outre l'addition (546) d'informations d'ID de l'utilisateur à une liste d'utilisateurs malveillants si le comportement d'exploitation (532, 534, 536) de l'utilisateur est déterminé comme étant un comportement machine.

5. Procédé selon l'une quelconque des revendications 1 à 4, dans lequel la demande (508) de visiter la page web comprend en outre des informations d'ID de l'utilisateur et le procédé comprend en outre :
la détermination du fait que les informations d'ID utilisateur sont ou non comprises dans une liste d'utilisateurs malveillants ; et
le refus de traiter la demande (508) pour visiter la page web si les informations d'ID utilisateur sont comprises dans la liste d'utilisateurs malveillants.

6. Procédé selon l'une quelconque des revendications 1 à 4, dans lequel la demande (508) pour visiter la page web comprend en outre des informations d'ID de l'utilisateur et le procédé comprend en outre :
la détermination du fait que les informations d'ID utilisateur sont comprises ou non dans une liste d'utilisateurs malveillants ; et
l'interdiction pour l'utilisateur de visiter la page web en réponse à la détermination que les informations d'ID utilisateur sont comprises dans la liste d'utilisateurs malveillants.

7. Procédé selon l'une quelconque des revendications précédentes, comprenant en outre :
l'obtention des informations du comportement d'exploitation (532, 534, 536) de l'utilisateur sur la page web ;
l'envoi (538) des informations obtenues du comportement d'exploitation (532, 534, 536) de l'utilisateur au serveur web (506) ;
la réception du serveur web (506) d'un résultat de la détermination que le comportement d'exploitation de l'utilisateur est ou non un comportement machine basé sur le comportement d'exploitation (532, 534, 536) de l'utilisateur.

8. Procédé selon la revendication 7, dans lequel l'obtention des informations du comportement d'exploitation de l'utilisateur (532, 534, 536) sur la page web comprend :
l'obtention d'instructions de collecte de comportement du serveur web (506) lorsque l'utilisateur (502) demande (508) à visiter la page web ; et
la collecte (530) du comportement d'exploitation (532, 534, 536) de l'utilisateur sur la page web lorsque l'utilisateur (502) visite (528) la page web sur la base des instructions de collecte de comportement.

9. Procédé selon la revendication 8, dans lequel l'obtention des instructions de collecte de comportement du serveur web (506) lorsque l'utilisateur (502) demande (508) à visiter la page web comprend :
l'envoi d'une demande de visite au serveur web (506) lorsque l'utilisateur (502) demande (508) à visiter la page web, la demande de visite (508) comprenant des informations d'adresse web de la page web ; et
la réception de codes de page web trouvés par le serveur web (506) sur la base des informations d'adresse web, les codes de page web comprenant l'instruction de collecte de comportement obtenue du serveur web (506).

10. Procédé selon l'une quelconque des revendications 7 à 9, dans lequel l'envoi (538) des informations obtenues du comportement d'exploitation (532, 534, 536) de l'utilisateur au serveur web (506) comprend quand un point préétabli dans le temps arrive, l'envoi (538) des informations obtenues de comportement d'exploitation (532, 534, 536) sur la page web au cours d'une période de temps, allant d'un point défini précédent dans le temps au point préétabli dans le temps.

11. Procédé selon l'une quelconque des revendications 7 à 10, comprenant en outre, avant d'obtenir des informations du comportement d'exploitation (532, 534, 536) de l'utilisateur sur la page web, la détermination que la demande (508) de l'utilisateur (502) de visiter la page web est une demande d'exploitation désignée.

12. Procédé selon l'une quelconque des revendications 7 à 11, comprenant en outre le navigateur web (504) qui envoie le comportement d'exploitation (532, 534, 536) de l'utilisateur au serveur web (506) selon un programme ; et
dans lequel éventuellement de multiples points dans le temps sont préétablis et, lorsqu'un point préétabli dans le temps arrive, le navigateur web (504) envoie le comportement d'exploitation (532, 534, 536) de l'utilisateur au serveur web (506).

13. Système (600) comprenant :
un ou plusieurs processeurs (602);
un ou plusieurs supports de stockage informatiques (604) sur le ou lesquels est stockée une pluralité d'instructions exécutables par ordinateur qui, lorsqu'elles sont exécutées par les un ou plusieurs processeurs (602), amènent les un ou plusieurs processeurs (602) à effectuer des actions comprenant :
la réception (102) d'une demande (508) d'accéder à une page web d'un navigateur web (504) lorsqu'un utilisateur (502) demande de visiter la page web à travers le navigateur web (504), la demande (508) d'accéder à la page web comprenant des informations d'adresse web de la page web ;
la recherche (106, 512) de codes de page web correspondant à la page web sur la base des informations d'adresse web ;
l'insertion d'instructions de récupération pour récupérer des instructions de collecte de comportement d'un serveur web (506) dans les codes de la page web ;
l'envoi (108, 304, 516) des codes de page web comprenant les instructions de récupération au navigateur web (504) ;
l'envoi (524) des instructions de collecte de comportement au navigateur web (504) après réception d'une demande de récupération (520) du navigateur web (504) pour récupérer les instructions de collecte de comportement basées sur les instructions de récupération, l'envoi comprenant :
la réalisation (522) d'un calcul de brouillage des instructions de collecte de comportement sur la base d'un algorithme de brouillage préétabli ; et
l'envoi (524) des instructions de collecte de comportement brouillées au navigateur web (504) ; et
la réception (540) des informations du comportement d'exploitation (532, 534, 536) de l'utilisateur sur la page web recueillies (530) par le navigateur web (504) sur la base des instructions de collecte de comportement, dans lequel le comportement d'exploitation (532, 534, 536) comprend des informations d'exploitation (532) de la souris, des informations d'exploitation (534) du clavier et des informations de flux d'exploitation (536) ;
le calcul (306, 544) d'une valeur pondérée du comportement machine (432) sur la base des informations du comportement d'exploitation (532, 534, 536) de l'utilisateur ; et
la détermination (308, 546) du fait que le comportement d'exploitation (532, 534, 536) de l'utilisateur est ou non un comportement machine sur la base de la valeur pondérée du comportement machine (432) ; et
si la valeur pondérée du comportement machine (432) n'est pas inférieure à un seuil défini, la détermination (308, 546) que le comportement d'exploitation (532, 534, 536) de l'utilisateur est un comportement machine.

14. Support lisible sur machine contenant des instructions qui, lorsqu'elles sont lues par un ordinateur, amènent un ou plusieurs processeurs (602) sur cet ordinateur à effectuer le procédé suivant consistant à :
recevoir (102) une demande (508) de visiter une page web en provenance d'un navigateur web (504) lorsqu'un utilisateur (502) demande de visiter la page web via le navigateur web (504), la demande de visiter la page web comprenant des informations d'adresse web de la page web ;
recevoir (302, 530) des informations d'un comportement d'exploitation de l'utilisateur sur la page web, dans lequel le comportement d'exploitation comprend des informations d'exploitation (532) de la souris, des informations d'exploitation (534) du clavier et des informations de flux d'exploitation (536) et dans lequel, en outre, la réception (302) d'informations du comportement d'exploitation (532, 534, 536) de l'utilisateur sur la page web comprend :
la recherche (106, 512) de codes de page web correspondant à la page web sur la base des informations d'adresse web ;
l'insertion d'instructions de récupération pour récupérer les instructions de collecte de comportement d'un serveur web (506) dans les codes de page web ;
l'envoi (108, 304, 516) des codes de page web comprenant les instructions de récupération au navigateur web (504) ;
après réception d'une demande de récupération (520) du navigateur web (504) pour récupérer les instructions de collecte de comportement sur la base des instructions de récupération, la réalisation (522) d'un calcul de brouillage des instructions de collecte de comportement sur la base d'un algorithme de brouillage préétabli et l'envoi (524) des instructions de collecte de comportement brouillées au navigateur web (504) ; et
la réception (540) des informations du comportement d'exploitation (532, 534, 536) de l'utilisateur sur la page web qui sont recueillies (530) par le navigateur web (504) sur la base des instructions de collecte de comportement ;
calculer (306, 544) une valeur pondérée du comportement machine (432) sur la base des informations du comportement d'exploitation (532, 534, 536) de l'utilisateur ;
déterminer (308, 546) si le comportement opératoire d'utilisateur (532, 534, 536) est ou non un comportement machine sur la base de la valeur pondérée du comportement machine (432) ; et,
si la valeur pondérée du comportement machine (432) n'est pas inférieure à un seuil prédéfini, déterminer (308, 546) que le comportement d'exploitation (532, 534, 536) de l'utilisateur est un comportement machine.
